# EUROPÄISCHE PATENTSCHRIFT

(11) **EP 1 040 289 B1**
(45) Veröffentlichungstag und Bekanntmachung des Hinweises auf die Patenterteilung: **17.07.2002**
(21) Anmeldenummer: 98966329.9
(22) Anmeldetag: 15.12.1998
(51) Int. Cl.: F16H 61/30, F16H 61/00, F16H 63/30

(54) **SCHALTEINRICHTUNG FÜR EIN GETRIEBE**
GEAR SHIFTING DEVICE
UNITE DE CHANGEMENT DE VITESSES POUR UNE BOITE DE VITESSE

(30) Priorität: 19.12.1997 DE 19756637
(43) Veröffentlichungstag der Anmeldung: 04.10.2000
(73) Patentinhaber: ZF FRIEDRICHSHAFEN Aktiengesellschaft, 88038 Friedrichshafen (DE)
(72) Erfinder: PETZOLD, Rainer, D-88045 Friedrichshafen (DE)
(86) Internationale Anmeldenummer: EP9808201
(87) Internationale Veröffentlichungsnummer: WO9932809

(56) Entgegenhaltungen:
- EP-A- 0 059 853
- EP-A- 0 417 657
- EP-A- 0 477 564
- EP-A- 0 723 097
- WO-A-97/05410
- GB-A- 2 163 224
- US-A- 3 822 724
- US-A- 4 570 502
- US-A- 4 774 624
- PATENT ABSTRACTS OF JAPAN vol. 007, no. 254 (M-255), 11. November 1983 (1983-11-11) & JP 58 137652 A (KOMATSU SEISAKUSHO KK), 16. August 1983 (1983-08-16)
- PATENT ABSTRACTS OF JAPAN vol. 010, no. 331 (M-533), 11. November 1986 (1986-11-11) & JP 61 136044 A (KUBOTA LTD), 23. Juni 1986 (1986-06-23)

## Beschreibung

Die Erfindung betrifft eine Schalteinrichtung für ein mehrgängiges Stufenwechselgetriebe nach dem Oberbegriff des Anspruchs 1.

Aus der GB 2 163 224 A ist eine Schalteinrichtung zur Verbindung von mit unterschiedlichen Drehzahlen rotierenden Bauteilen eine Getriebes mit mehreren Schaltgruppen bekannt, wobei die Schalteinrichtung von einem Steuerfluid betätigt wird. Für jede Schaltgruppe ist eine Einheit vorgesehen, in der Ventile, Schaltzylinder, Kolben und Schaltelemente zusammengefasst sind. Die Schalteinrichtung wird über elektrisch angesteuerte 2/2-Wegeventile betätigt und ist mit einer Wegmesseinrichtung verbunden, deren Signale an die 2/2-Wegeventile übertragbar sind. Die Signale führen zu einer Ansteuerung der 2/2-Wegeventile, die abhängig ist von der von der Wegmesseinrichtung erfassten Position des Kolbens in bezug auf den Schaltzylinder. Mit der Schalteinrichtung sollen unerwünschte Schaltgeräusche vermieden werden.

Der vorliegenden Erfindung liegt die Aufgabe zugrunde, eine Schalteinrichtung aufzuzeigen, die variable Synchronzeiten und schnellere Schaltzeiten ermöglicht.

Die Aufgabe wird gelöst mit einer Schalteinrichtung mit den Merkmalen nach Anspruch 1, Ausgestaltungen sind Gegenstand von Unteransprüchen.

Es wird vorgeschlagen, für jede Schaltgruppe des Stufenwechselgetriebes eine Einheit vorzusehen, in der die Ventile, Schaltzylinder, Kolben und Schaltelemente zusammengefaßt sind.
Als auslösende Ventile werden gepulste 2/2-Wegeventile verwendet. Dabei wird eine Wegmesseinrichtung verwendet, die die aktuelle Position des Kolbens in Bezug auf den Schaltzylinder anzeigt.

Damit ist es möglich, beim Einschalten der Zahnräder in eine drehmomentübertragende Verbindung eine Anpassung von Schaltkraft und Schaltzeit vorzunehmen. Die Anpassung besteht vorzugsweise darin, daß beim Einschalten der Verbindung die Ventile mit einer höheren Frequenz beaufschlagt werden, als beim Ausschalten.

In einer weiteren vorteilhaften Ausgestaltung wird die Pulsfrequenz der 2/2-Wegeventile bei Schaltungen in der Ebenen unterschiedlich vorgesehen gegenüber der Pulsfrequenz bei Schaltungen in nicht ebenem Gelände, also bei Steigungen und Gefällen. Dabei ist die Pulsfrequenz bei Schaltungen in der Ebenen vorteilhafterweise niedriger als bei nicht ebener Fahrbahn.

In einer weiteren vorteilhaften Ausgestaltung ist vorgesehen, daß die Pulsfrequenz der 2/2-Wegeventile in Abhängigkeit von der Fahrzeugmasse steuerbar ist.

Das Betreiben der gepulsten Ventile erfolgt in einer vorteilhaften Ausgestaltung mit einer Spannung, die ein Mehrfaches der Nennspannung des Ventils beträgt.

Vorzugsweise ist die Wegmesseinrichtung innerhalb des Schaltzylinders angeordnet. Sie kann aber auch an einer Position außerhalb des Schaltzylinders vorgesehen sein, wo sie mit dem beweglichen Teil der Einheit verbunden ist.

In einer weiteren vorteilhaften Ausgestaltung ist der Kolben der Schalteinheit auf einer Kolbenstange angeordnet, auf der er axial bewegbar ist. Auf dieser einen Kolbenstange können die Kolben der Schalteinheiten von mehrerer Schaltgruppen vorgesehen sein, ohne sich gegenseitig zu behindern. Vorzugsweise sind die Einheiten für die jeweiligen Schaltgruppen in einer Reihe angeordnet.

In einer weiteren vorteilhaften Ausgestaltung werden mehrere Schalteinheiten, von denen jede Schalteinheit zu jeweils einer Schaltgruppe gehört, in einem Bauteil zusammengefaßt. Dieses Bauteil kann vom Getriebe separat zusammenbaubar sein und dann an das Getriebe als eine Einheit angepasst und angebaut werden. Dieses ermöglicht auch eine separate Fertigung und Prüfbarkeit einer kompletten Schalteinrichtung unabhängig von der jeweiligen Getriebeart.

In einer vorteilhaften Ausgestaltung weisen die Schalteineinheiten Anschläge auf, die ein Anschlagen der Kolben an den Rändern der Schaltzylinder dämpfen. Diese Anschläge können innerhalb des Schaltzylinders vorgesehen sein, oder aber auch außerhalb an einer mit dem Kolben verbundenen Teil der Schalteinheiten vorgesehen sein.

Im Gegensatz zu den bekannten Schalteinrichtungen sitzt die gesamte Schalteinrichtung in unmittelbarer Nähe der Schaltgruppe.
Eine Schaltgruppe wird vorzugsweise gebildet aus zwei im Getriebe nebeneinander angeordneten Zahnrädern, die wechselweise in die Drehmomentübertragung eingeschaltet werden können. Eine Schaltgruppe kann jedoch auch nur aus einem in die Drehmomentübertragung einschaltbarem Zahnrad bestehen, wenn beispielsweise bei der Schaltung einer Rückwärtsgangübersetzung nicht zwei gegenüberliegende Zahnräder geschaltet werden müssen.

Durch die Anordnung in einer kompakten Einheit können Verbindungselement zwischen den vorzugsweise aus Schaltgabeln oder Schaltschwingen gebildeten Schaltelementen und den Schaltzylindern und Schaltkolben entfallen. Solche Verbindungselemente sind, wie bereits erwähnt, im wesentlichen aus Stahl gefertigte Schaltstangen, die in hohem Maße zur Gesamtmasse des Getriebes beitragen. Die Reaktionszeiten zwischen dem eine Schaltung auslösenden Befehl und der Bewegung der Schaltelemente wird durch den Wegfall der zu bewegenden massigen Schaltstangen deutlich verkürzt.

Die Erfindung wird anhand einer Zeichnung näher beschrieben.

Es zeigen:
- Fig. 1: Getriebe mit Schalteinrichtungen;
- Fig. 2: Anordnung von Schalteinrichtungen in Reihe und
- Fig. 3: Darstellung einer Schalteinrichtung.

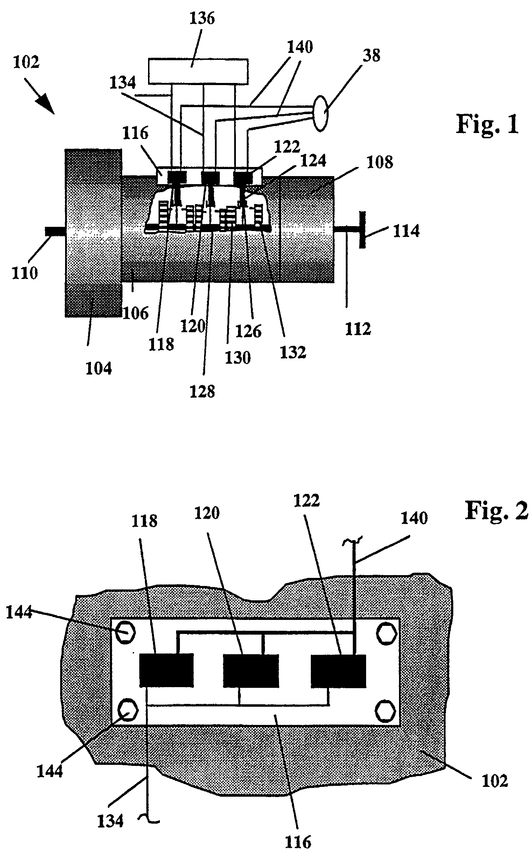

Die Fig. 1 zeigt eine schematische Darstellung eines Getriebes 102 in einem hier nicht dargestellten Fahrzeug. Das Getriebe 102 weist eine Kupplungsglocke 104, ein Hauptgetriebe 106 und ein Hilfsgetriebe 108 auf, weiterhin eine Antriebswelle 110 und eine Abtriebswelle 112 mit Abtriebsflansch 114. Am Hauptgetriebe 106 ist ein Bauteil 116 vorgesehen. Das Bauteil 116 zeigt in der hier dargestellten Anordnung drei einzelne Schalteinrichtungen 118, 120 und 122. Die beispielhaft gezeigte Schalteinrichtung 118 greift mit einer Schaltgabel 124 in eine Schiebemuffe 126 ein, die entlang einer Welle 128 axial verschiebbar ist und mit der Welle 128 drehfest verbunden ist. Durch eine Verschiebung läßt sich die Schiebemuffe 126 zur Bildung einer Drehmomentübertragung entweder mit dem Zahnrad 130 oder dem Zahnrad 132 verbinden. Die Schalteinrichtungen 118, 120 und 122 sind über elektrische Leitungen 134 mit einer Steuereinrichtung 136, beispielsweise einem elektronischen Getrieberechner oder Fahrzeugleitrechner verbunden. Ebenfalls sind die Schalteinrichtungen 118, 120 und 122 mit einer Versorgungseinrichtung 138 für ein Betätigungsfluid über Leitungen 140 verbunden.

Fig. 2 zeigt einen Ausschnitt des Gehäuses von Getriebe 102, in dem in einem Bauteil 116 die Schalteinrichtungen 118, 120 und 122 zusammengefaßt sind. Das Bauteil 116 ist mit Hilfe von Verbindungselementen 144 am Getriebe 102 befestigt. Zu den Schalteinrichtungen 118, 120 und 122 führen Leitungen 140 zur Zuführung des Betätigungsfluids und elektrische Leitungen 134 zur Verbindung mit der Steuereinrichtung 136.

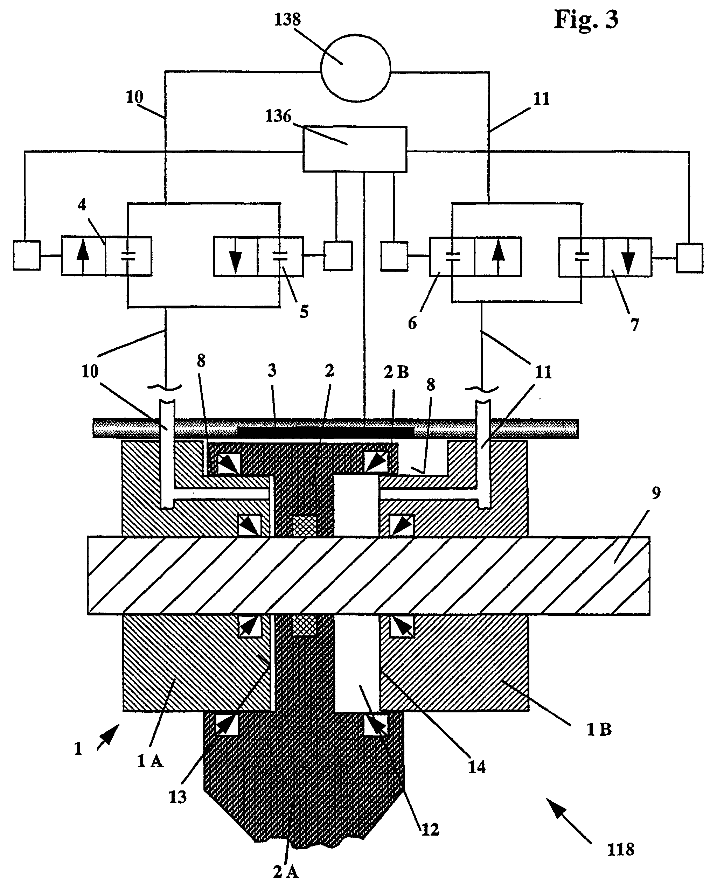

Die Fig. 3 zeigt eine Prinzipdarstellung einer Schalteinrichtung 118 für automatisierte Schaltgetriebe in Fahrzeugen mit Wegmeßeinrichtung und pulsfähigen Wegeventilen im Längsschnitt, welche einen Schaltzylinder 1, der aus zwei Zylinderteilen 1A und 1B ausgebildet ist, und einen Schaltkolben 2 aufweist.

Durch die Gestaltung des Schaltzylinders 1 aus zwei separaten Zylinderteilen 1A und 1B können die bewegten Massen erheblich reduziert werden.

Im dargestellten Ausführungsbeispiel bewegt sich der als Schaltelement ausgebildete Schaltkolben 2 zwischen den fixierten Zylinderteilen 1A und 1B.

Der Schaltkolben 2 ist dabei mit einer Schaltgabel 2A als einstückiges Bauteil ausgeführt, wodurch Verbindungselemente zwischen dem Schaltkolben 2 und einem weiteren Schaltelement, wie beispielsweise der Schaltgabel 2A oder einer möglichen Schaltschwinge, nicht benötigt werden. Die Verbindung zwischen Schaltkolben 2 und Schaltgabel 2A ist somit robust und auf kürzestem Wege ausgebildet.

Genauso ist es aber auch in einer anderen, nicht dargestellten Ausführung möglich, daß die Zylinderteile 1A und 1B mit der Schaltgabel 2A verbunden sind, wobei die Zylinderteile 1A und 1B die Bewegung relativ zum Schaltkolben 2 ausführen.

Aufgrund der konstruktiv sehr vorteilhaften Ausführung des Schaltzylinders 1, nämlich in geteilter Bauweise aus zwei Zylinderteilen 1A und 1B, können somit auch die Zylinderteile 1A und 1B als Schaltelemente dienen, wodurch eine variablere Getriebegestaltung möglich ist.

Zur Erfassung der Stellung des Schaltkolbens 2 im Schaltzylinder 1 bzw. zwischen den Zylinderteilen 1A und 1B gemäß Fig. 3 ist parallel zur Verschiebeachse des Schaltkolbens 2 eine Wegmeßeinrichtung 3 angebracht, beispielsweise induktive Wegsensoren, die mit einer Steuereinrichtung 36 verbunden sind, welche in Abhängigkeit der von den induktiven Wegsensoren ermittelten Stellung des Schaltkolbens 2 elektronische Steuersignale an pulsfähige Ventile 4, 5, 6 und 7 weitergibt.

Der Schaltkolben 2 weist einen Führungsabsatz 2B auf, über den er in einer Eindrehung 8, welche an jedem der Zylinderteile 1A und 1B ausgebildet ist, geführt ist. Sowohl die Zylinderteile 1A und 1B als auch der Schaltkolben 2 sind um eine Schiene 9 angeordnet, welche mittig durch die Zylinderteile 1A und 1B und den Schaltkolben 2 in Bewegungsrichtung des Schaltkolbens 2 verläuft.

Die Anordnung der Zylinderteile 1A und 1B des Schaltzylinders 1 und des Schaltkolben 1 auf der Schiene 9 ist vor allem dahingehend vorteilhaft, daß dadurch eine Reihe von Schaltzylindern auf geringem Bauraum einfach angeordnet werden können, wobei besonders der verringerte Teileaufwand und die einfache Montage entscheidende Kostenvorteile bringen. Prinzipiell können die Betätigungen für alle Schalteinrichtungen eines Getriebes auf dieser Schiene 9 angebracht werden.

Bezug nehmend auf Fig. 3 sind die Zylinderteile 1A und 1B auf der Schiene 9 fest vormontiert eingebaut, sie können aber selbstverständlich auch abhängig von den Getriebetoleranzen im eingebauten Zustand fixiert werden.

Zum Schalten des Schaltkolbens 2 im Schaltzylinder 1 wird aus einer externen Druckquelle 38 über die Druckleitungen 10 bzw. 11 ein pneumatisches oder hydraulisches Druckmittel der Schalteinrichtung zugeführt. In den Druckleitungen 10 und 11 sind jeweils zwei elektromagnetische 2/2-Wegeventile 4 und 5 bzw. 6 und 7 zwischengeschaltet, die den Durchfluß des Druckmittels durch die Druckleitungen 10 bzw. 11 derart steuern, daß sich der Schaltkolben 2 mit einer Geschwindigkeit, die einer empirisch oder über eine Simulation ermittelten Optimalgeschwindigkeit in dieser Wegposition entspricht, bewegt. Die Art und Weise der Ventilansteuerung kann dabei getriebespezifisch von den zu schaltenden Massen abhängig angepaßt werden.

Die pulsfähigen Ventile 4, 5, 6 und 7 sind für einen Dauerbetrieb bei 4 Volt ausgelegt, jedoch werden sie hier mit 24 Volt-Impulsen betrieben. Durch die Ansteuerung der Pulsventile 4, 5, 6 und 7 mit starken Stromimpulsen, reagieren diese sehr schnell. Die Pulsventile 4, 5, 6 und 7 werden dabei in Abhängigkeit der Stellung des Schaltkolbens 2 im Schaltzylinder 1, welche von der Wegmeßeinrichtung 3 erfaßt wird, über die Steuereinrichtung 36 angesteuert. Je nach Stellung des Schaltkolbens 2 werden unterschiedliche elektrische Impulse an die Pulsventile 4, 5, 6 und 7 abgegeben, wobei die Pulsventile mit einer vordefinierten, hohen Pulsfrequenz geöffnet und mit einer vordefinierten, geringeren Pulsfrequenz geschlossen werden. So wird der Durchfluß von Druckmittel, welches den Schaltkolben 2 im Schaltzylinder 1 in Bewegung setzt, und damit auch die Geschwindigkeit des Schaltkolbens 2 während eines Schaltvorganges im Schaltzylinder 1 variiert. Die Ansteuerung der Pulsventile 4, 5, 6 und 7 ist dabei so ausgelegt, daß alle pulsfähigen Ventile einzeln, gegeneinander oder miteinander aussteuerbar sind. Dadurch ergeben sich unterschiedliche Geschwindigkeiten für den Schaltkolben und somit auch unterschiedliche dynamische Kräfte.

Auf diese Weise wird die Schaltkolbengeschwindigkeit von jeweils zwei pulsfähigen 2/2-Wegeventilen derart variiert, daß der Schaltkolben während des Schaltweges bis zu einem Synchronisationsbeginn des Getriebes möglichst mit voller Druckkraft bewegt wird und nach dem Ende der Synchronisierungsphase mit geringer Geschwindigkeit in seine Endstellung gebracht wird.

Zur Verdeutlichung der Funktionsweise der Schalteinrichtung wird nachfolgend ein Schaltablauf prinzipmäßig beschrieben.

Wird bei einem Schaltvorgang Druckmittel durch die Leitung 10 der Schalteinrichtung zugeführt, so ist das Pulsventil 5, das die Funktion eines Zuflußventiles hat, geöffnet, während das als Abflußventil ausgebildete Pulsventil 4 geschlossen ist. Damit gelangt Druckmittel über die Leitung 10 durch das Zylinderteil 1A in den Arbeitsraum 12 des Schaltkolbens 2 und bewegt den Schaltkolben 2 von einer Anschlagfläche 13 am Zylinderteil 1A in Richtung einer der Anschlagfläche 13 gegenüberliegenden Anschlagfläche 14 am Zylinderteil 1B.

Bei Eintreten einer Synchronisierungsphase im Getriebe verharrt der Schaltkolben 2 kurz vor seinem Anschlag an der Anschlagfläche 14 in einer Sperrstellung, wobei die Druckbeaufschlagung des Schaltkolbens 2 durch weitere Zuführung von Druckmittel durch die Leitung 10 erheblich zunimmt.

Der in Bewegungsrichtung des Schaltkolbens 2 liegende Teil des Arbeitsraumes 12 des Schaltkolbens wird während des gesamten Schaltvorganges über die Druckleitung 11 und das geöffnete Pulsventil 6, das als Abflußventil ausgestaltet ist, entspannt. Das der Druckmittelzuführung dienende Pulsventil 7 ist dabei geschlossen.

Mit Ende des Synchronisierungsvorganges wird der Schaltkolben 2 entsperrt, womit sich dieser wieder in Richtung seiner Endposition an der Anschlagfläche 14 in Bewegung setzt, und zwar mit großer Geschwindigkeit aufgrund der hohen Druckbeaufschlagung während des Synchronisierungsvorganges. Dabei wird die jeweilige Stellung des Schaltkolbens 2 von der Wegmeßeinrichtung 3 erfaßt, welche über elektrische Impulse die Pulsventile 6 und 7 derart ansteuert, daß das der Entlüftung dienende Pulsventil 6 geschlossen wird, was dazu führt, daß ein sogenanntes Polster von Druckmittel die Bewegung des Schaltkolbens 2 auf dem letzten kurzen Wegstück zur Anschlagfläche 14 drastisch reduziert. Die Druckzuführung über das Pulsventil 5 an der Druckleitung 10 wird bereits während oder gegen Ende des kurzfristigen Stillstandes des Schaltkolbens 2 während der Synchronisierungsphase des Getriebes durch Schließen des Zuleitungsventiles 5 eingestellt. Um den Schaltkolben 2 trotz des Druckmittelpolsters zwischen Schaltkolben 2 und Anschlagfläche 14 in seine Endstellung zu bringen, wird das Pulsventil 6 von der Wegmeßeinrichtung 3 unmittelbar vor dem Anschlag des Schaltkolbens 2 an der Anschlagfläche 14 in eine geöffnete Stellung geschaltet, damit das zwischen Schaltkolben 2 und Anschlagfläche 14 befindliche Druckmittel über die Druckleitung 11 entweichen kann und der Schaltkolben 2 bei seinem Anschlag an der Anschlagfläche 14 nicht zurückfedert.

Bei einem Umschalten erfolgt der gleiche Schaltablauf in umgekehrter Richtung, wobei die Pulsventile 5 und 6 geschlossen sind, die Schalteinrichtung über die Druckleitung 11 und das geöffnete Pulsventil 7 mit Druck beaufschlagt wird und über das geöffnete Pulsventil 4 und die Druckleitung 10 entspannt wird.

Bei der vorgeschlagenen Schalteinrichtung ist durch die elektronische Ansteuerung der gepulsten Ventile eine Variation der Synchronzeiten möglich. Damit lassen sich die Synchronisiervorgänge für Schaltungen in der Ebenen, in Gefällen und Steigungen unterschiedlich vornehmen. Bei Schaltungen in der Ebenen können die Synchronisiereinrichtungen mit einer maximalen Schonung bedient werden. Im Gefälle lassen sich die Synchronisiereinrichtungen mit einer höheren Pulsfrequenz beaufschlagen und bis zu einer maximalen Belastung ausnutzen, was dort zu sicherheitsrelevanten kürzeren Schaltzeiten führen kann. Durch die Variabilität der Schalt- bzw. Synchronkräfte lassen sich die Schaltgeschwindigkeiten optimieren.

Wird im Fahrzeug zusätzlich eine Berechnung der Fahrzeugmasse vorgesehen, so kann das Ergebnis dieser Berechnung mit in die Steuerung der Pulsfrequenz einbezogen werden. Damit kann die Synchronzeit in Abhängigkeit der Fahrzeugmasse angepaßt werden und eine weitere Optimierung von Schaltzeit und Schonung der Synchronisierung erreicht werden.

Zur Vermeidung von Schaltungen bei einer Zahn-auf-Zahn-Stellung der zu verbindenden Verzahnungen kann eine Überwachung einer solchen Stellung vorgesehen sein. In einem solchen erkannten Fall wird die Synchronkraft minimiert, damit in der Synchronisierung ein Schleppmoment erzielt wird, wodurch die Zahn-auf-Zahn-Stellung aufgehoben wird.

Bei der Ansteuerung der Ventile ist darauf zu achten, daß diese nicht überlastet werden. Eine Überlastung könnte entstehen durch einen Dauerimpuls oder durch zu kurze Pausen zwischen den Impulsen.

### Bezugszeichen

- 1: Schaltzylinder
1A Zylinderteil
1B Zylinderteil
- 2: Schaltkolben
2A Schaltgabel
2B Führungsabsatz
- 3: Wegmeßeinrichtung
- 4: pulsfähiges Ventil
- 5: pulsfähiges Ventil
- 6: pulsfähiges Ventil
- 7: pulsfähgies Ventil
- 8: Eindrehung
- 9: Führungsschiene
- 10: Druckleitung
- 11: Druckleitung
- 12: Arbeitsraum des Schaltkolbens
- 13: Anschlagfläche
- 14: Anschlagfläche
- 102: Getriebe
- 104: Kupplungsglocke
- 106: Hauptgetriebe
- 108: Hilfsgetriebe
- 110: Antriebswelle
- 112: Abtriebswelle
- 114: Abtriebsflansch
- 116: Schalteinrichtung
- 118: Schalteinrichtung
- 120: Schalteinrichtung
- 122: Schalteinrichtung
- 124: Schaltgabel
- 126: Schiebemuffe
- 128: Welle
- 130: Zahnrad
- 132: Zahnrad
- 134: Leitung
- 136: Steuereinrichtung
- 138: Druckquelle
- 140: Leitung
- 144: Verbindungselement

## Patentansprüche

1. Schalteinrichtung (118) zur Verbindung von mit unterschiedlichen Drehzahlen rotierenden Bauteilen eines Getriebes (102) mit wenigstens einer Schaltgruppe, wobei die Schalteinrichtung (118) von einem Steuerfluid betätigt wird, für jede Schaltgruppe eine Einheit vorgesehen ist, in der Ventile (4, 5, 6, 7), Schaltzylinder (1), Kolben (2) und Schaltelemente (2A) zusammengefaßt sind, die Schalteinrichtung (118) über elektrisch angesteuerte, gepulste 2/2-Wegeventile (4, 5, 6, 7) betätigt wird und die Schalteinrichtung (118) mit einer Wegmeßeinrichtung (3) verbunden ist, deren Signale an die 2/2-Wegeventile (4, 5, 6, 7) übertragbar sind und zu einer Ansteuerung der 2/2-Wegeventile (4, 5, 6, 7) führen, die abhängig von der von der Weßmeßeinrichtung (3) erfaßten Position des Kolbens (2) in Bezug auf den Schaltzylinder (1) ist, **dadurch gekennzeichnet, daß** die Pulsfrequenz der 2/2-Wegeventile (4, 5, 6, 7) bei der Schließung der Schalteinrichtung (118) höher ist als bei der Öffnung der Schalteinrichtung (118).

2. Schalteinrichtung (118) nach Anspruch 1, **dadurch gekennzeichnet, daß** die Pulsfrequenz der 2/2-Wegeventile (4, 5, 6, 7) bei Schaltungen in der Ebenen gegenüber der Pulsfrequenz bei Schaltungen bei nicht ebener Fahrbahn unterschiedlich ist.

3. Schalteinrichtung (118) nach Anspruch 2, **dadurch gekennzeichnet, daß** die Pulsfrequenz der 2/2-Wegeventile (4, 5, 6, 7) bei Schaltungen in der Ebenen niedriger als die Pulsfrequenz bei Schaltungen bei nicht ebener Fahrbahn ist.

4. Schalteinrichtung (118) nach einem der Ansprüche 1 bis 3, **dadurch gekennzeichnet, daß** die Pulsfrequenz der 2/2-Wegeventile (4, 5, 6, 7) in Abhängigkeit von der Fahrzeugmasse steuerbar ist.

5. Schalteinrichtung (118) nach einem der vorherigen Ansprüche, **dadurch gekennzeichnet, daß** die Ventile (4, 5, 6, 7) mit einer Spannung beaufschlagt sind, die ein Mehrfaches der Nennspannung des Ventils entspricht.

## Claims

1. Shifting device (118) for connecting components, which rotate at different speeds, of a gear assembly (102) to at least one shift group, wherein the shifting device (118) is operated by a control fluid, a unit is provided for each shift group, in which unit valves (4, 5, 6, 7), shift cylinder (1), piston (2) and shift elements (2A) are assembled, the shifting device (118) is operated via electrically activated, pulsed 2/2-way valves (4, 5, 6, 7), and the shifting device (118) is connected to a displacement measuring device (3), the signals of which can be transmitted to the 2/2-way valves (4, 5, 6, 7) and result in actuation of the 2/2-way valves (4, 5, 6, 7), which actuation is dependent on the position - detected by the displacement measuring device (3) - of the piston (2) in relation to the shift cylinder (1), **characterised in that** the pulse frequency of the 2/2-way valves (4, 5, 6, 7) is higher when engaging the shifting device (118) than when disengaging the shifting device (118).

2. Shifting device (118) according to Claim 1, **characterised in that** the pulse frequency of the 2/2-way valves (4, 5, 6, 7) when shifting gears on flat ground is different from the pulse frequency when shifting gears on an uneven roadway.

3. Shifting device (118) according to Claim 2, **characterised in that** the pulse frequency of the 2/2-way valves (4, 5, 6, 7) when shifting gears on flat ground is lower than the pulse frequency when shifting gears on an uneven roadway.

4. Shifting device (118) according to any one of Claims 1 to 3, **characterised in that** the pulse frequency of the 2/2-way valves (4, 5, 6, 7) can be controlled in accordance with the vehicle mass.

5. Shifting device (118) according to any one of the preceding Claims, **characterised in that** a voltage which corresponds to a multiple of the valve nominal voltage is applied to the valves (4, 5, 6, 7).

## Revendications

1. Dispositif de changement de vitesses (118) pour la liaison d'éléments d'une boîte de vitesses (102) tournants à différents régimes, avec au moins un groupe-relais, sachant que le dispositif de changement de vitesses (118) est actionné par un fluide de commande, et sachant que pour chaque groupe-relais est prévue une unité, dans laquelle sont regroupées des valves (4, 5, 6, 7), des vérins de commande (1), des pistons (2) et des éléments de commande (2A), et sachant que le dispositif de changement de vitesses (118) est actionné par des distributeurs 2/2 (4, 5, 6, 7) pulsés et pilotés électriquement, et sachant que le dispositif de changement de vitesses (118) est lié à un dispositif de mesure de la course (3), dont les signaux peuvent être transmis aux distributeurs 2/2 (4, 5, 6, 7) entraînant le pilotage des distributeurs 2/2 (4, 5, 6, 7), qui dépend de la position du piston (2) par rapport au vérin de commande (1) enregistrée par le dispositif de mesure de la course (3), **caractérisé en ce que** la fréquence d'impulsions des distributeurs 2/2 (4, 5, 6, 7) lors de la fermeture du dispositif de changement de vitesses (118) est plus élevée que lors de l'ouverture du dispositif de changement de vitesses (118).

2. Dispositif de changement de vitesses (118) selon la revendication 1,
**caractérisé en ce que** la fréquence d'impulsions des distributeurs 2/2 (4, 5, 6, 7) est différente pour les changements de vitesses sur plat par rapport aux changements de vitesses sur chaussée non plane.

3. Dispositif de changement de vitesses (118) selon la revendication 1,
**caractérisé en ce que** la fréquence d'impulsions des distributeurs 2/2 (4, 5, 6, 7) est plus inférieure pour les changements de vitesses sur plat par rapport aux changements de vitesses sur chaussée non plane.

4. Dispositif de changement de vitesses (118) selon la revendication 1,
**caractérisé en ce que** la fréquence d'impulsions des distributeurs 2/2 (4, 5, 6, 7) peut être pilotée en fonction de la masse du véhicule.

5. Dispositif de changement de vitesses (118) selon la revendication 1,
**caractérisé en ce que** les valves (4, 5, 6, 7) sont mises sous une tension qui correspond à un multiple de la tension nominale de la valve.
